**Europäisches Patentamt**

**European Patent Office**

**Office européen des brevets**

(19)

(11) Veröffentlichungsnummer: **0 118 602**
A1

# (12) EUROPÄISCHE PATENTANMELDUNG

(21) Anmeldenummer: **83111297.4**

(22) Anmeldetag: **11.11.83**

(51) Int. Cl.³: **B 44 D 3/00**
B 44 D 3/22, B 44 D 3/12
A 23 L 1/275

(30) Priorität: **11.02.83 DE 8303853 U**

(43) Veröffentlichungstag der Anmeldung:
**19.09.84 Patentblatt 84/38**

(84) Benannte Vertragsstaaten:
**AT BE CH LI LU NL**

(71) Anmelder: **Salus-Haus Dr. Med. Otto Greither**
**Bahnhofstrasse 24**
**D-8206 Bruckmühl/Mangfall(DE)**

(72) Erfinder: **Greither, Otto, Dr.**
**Berghamerstrasse 7**
**D-8206 Bruckmühl/Mangfall(DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel Postfach**
**860820**
**D-8000 München 86(DE)**

(54) **Vorrichtung zum Färben von Ostereiern.**

(57) Vorrichtung zum Färben von Ostereiern, gekennzeichnet durch einen wenigstens einen Pflanzenfarbstoff einschließenden Filterbeutel.

EP 0 118 602 A1

Croydon Printing Company Ltd.

Die Erfindung betrifft eine Vorrichtung zum Färben
von Ostereiern.

Aufgabe der Erfindung ist es, eine Vorrichtung anzugeben, die einfach und sauber handhabbar ist.

Zur Lösung dieser Aufgabe ist die Vorrichtung gekennzeichnet durch einen wenigstens einen Pflanzenfarbstoff einschließenden Filterbeutel.

Zum Färben von Ostereiern legt man einen solchen
mit wenigstens einem Pflanzenfarbstoff gefüllten
Filterbeutel in Wasser und bringt dieses zum Kochen.
Nach etwa 5 Minuten legt man die rohen Eier in
die kochende Farblösung, die durch den Austritt des
Pflanzenfarbstoffs aus dem Filterbeutel in das
kochende Wasser entstanden ist. Nach Färbung der
Eier kann man sie mit Fett einreiben, um ihrer
Färbung einen leuchtenden Glanz zu verleihen.

Die Menge des Farbstoffs in einem Filterbeutel wird
bevorzugt so bemessen, daß sie zum Färben von 4 bis
6 Eiern in einem halben Liter Wasser ausreicht.

Als gelber Pflanzenfarbstoff sind bevorzugt Schnurbaumblüten (Sophora japonica), als brauner Pflanzenfarbstoff bevorzugt braune Krappwurzel (Rubia tinctorum), als roter Pflanzenfarbstoff bevorzugt Rotholz (Caesalpinia echinata) und als blauer Pflanzenfarbstoff bevorzugt Blauholz (Haematoxylon
compechianum) vorgesehen. Die Filterbeutel bestehen
bevorzugt aus ungebleichtem Filterbeutelpapier.
Das Filterbeutelpapier hat bevorzugt ein Flächenge-

0118602

wicht von 1o bis 14 - vorzugsweise 12 - g/m².

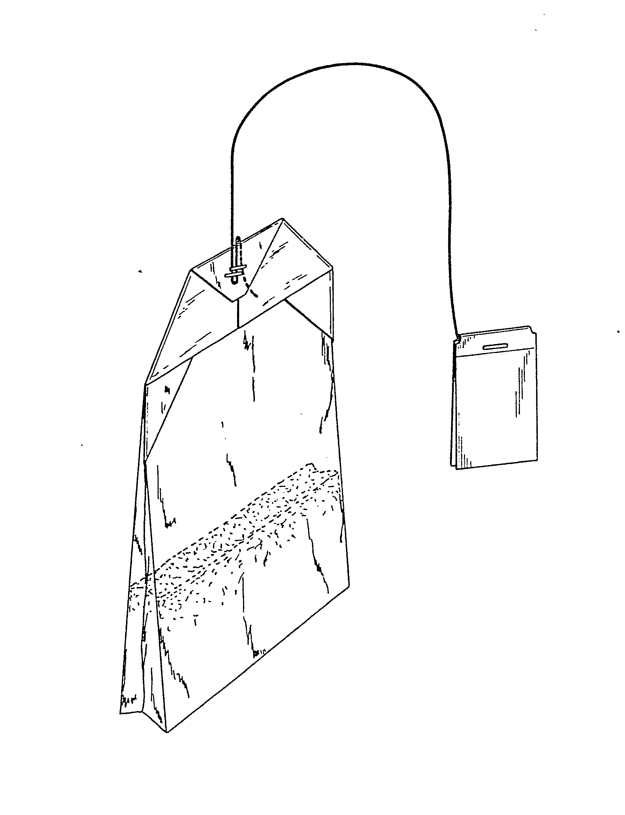

In der beigefügten Zeichnung ist ein Filterbeutel dargestellt, der mit einem Pflanzenfarbstoff gefüllt ist. Die Faltung des Filterbeutels ist an sich bekannt, ebenso das Anbringen eines Fadens mit einem Anfaßstreifen.

ANSPRÜCHE

1. Vorrichtung zum Färben von Ostereiern, gekennzeichnet durch einen wenigstens einen Pflanzenfarbstoff einschließenden Filterbeutel.

2. Vorrichtung nach Anspruch 1, dadurch gekennzeichnet, daß der Filterbeutel als gelben Pflanzenfarbstoff Schnurbaumblüten (Sophora japonica) enthält.

3. Vorrichtung nach Anspruch 1 oder 2, dadurch gekennzeichnet, daß der Filterbeutel als braunen Pflanzenfarbstoff braune Krappwurzel (Rubia tinctorum) enthält.

4. Vorrichtung nach einem der vorgenannten Ansprüche, dadurch gekennzeichnet, daß der Filterbeutel als roten Pflanzenfarbstoff Rotholz (Caesalpinia echinata) enthält.

5. Vorrichtung nach einem der vorgenannten Ansprüche, dadurch gekennzeichnet, daß der Filterbeutel als blauen Pflanzenfarbstoff Blauholz (Haematoxylon compechianum) enthält.

6. Vorrichtung nach einem der vorgenannten Ansprüche, dadurch gekennzeichnet, daß der Filterbeutel aus ungebleichtem Filterbeutelpapier besteht.

7. Vorrichtung nach Anspruch 6, dadurch gekennzeichnet, daß das Filterbeutelpapier ein Flächengewicht von 1o bis 14 - vorzugsweise 12 - Gramm pro Quadratmeter aufweist.

# EUROPÄISCHER RECHERCHENBERICHT

**0118602**
Nummer der Anmeldung

EP 83 11 1297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 370 941 (B.R. BELTON) <br> * Spalte 2, Zeile 62 - Spalte 3, Zeile 15 * | 1 | B 44 D 3/00 <br> B 44 D 3/22 <br> B 44 D 3/12 <br> A 23 L 1/275 |
| Y | CH-A- 209 650 (MELITTA WERKE BENTZ) <br> * Seite 1, rechte Spalte * | 1 | |
| A | | 6,7 | |
| A | US-A-4 181 745 (G.H. GROWE) <br> * Spalte 2, zeilen 41-64 * | 1 | |
| A | DE-C- 868 862 (J.H. BACHMANN) <br> * Seite 1, Zeilen 1-20; Seite 2, Zeilen 2-13 * | 1 | **RECHERCHIERTE SACHGEBIETE (Int. Cl. ³)** |
| A | DE-A-1 570 015 (H. EULER) <br> * Seite 1, Seitenmitte * | 2-5 | B 44 D <br> A 23 L <br> B 65 D |
| A | DE-C- 172 289 (GEBR. HEITMANN) <br><br> * Insgesamt * | | |

-----

Der vorliegende Recherchenbericht wurde für alle Patentansprüche erstellt.

| Recherchenort | Abschlußdatum der Recherche | Prüfer |
|---|---|---|
| DEN HAAG | 17-05-1984 | FRIDEN N. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

\& : Mitglied der gleichen Patentfamilie, übereinstimmendes Dokument

EPA Form 1503.03.82